# FASCICULE DE BREVET EUROPEEN

(11) **EP 2 457 713 B1**
(45) Date de publication et mention de la délivrance du brevet: **10.07.2013**
(21) Numéro de dépôt: 11190697.0
(22) Date de dépôt: 25.11.2011
(51) Int. Cl.: B29C 45/00

(54) **Système de moulage et d'emboîtement**
Giess- und Steckmontagesystem
Moulding and plug-in mounting system

(30) Priorité: 29.11.2010 FR 1059846
(43) Date de publication de la demande: 30.05.2012
(73) Titulaire: Moulindustrie, 14350 Sainte Marie Laumont (FR)
(72) Inventeur: Moulin Jacky, 14350 Sainte Marie Laumont (FR)
(74) Mandataire: Maillet, Alain

(56) Documents cités:
- WO-A1-2010/128072
- FR-A1- 2 939 710

## Description

La présente invention concerne un système de moulage et d'emboîtement de deux pièces.

Un capuchon du type capuchon pour une bouteille contenant un produit liquide comme du shampoing, de l'après-shampoing, du produit vaisselle ou autres, comporte généralement un corps et un opercule. Le corps est destiné à s'emboîter sur la bouteille et l'opercule est destiné à être manoeuvré d'une position de fermeture vers une position d'ouverture et vice-versa pour permettre la retenue du produit dans la bouteille ou son écoulement hors de la bouteille.

De tels capuchons peuvent être également utilisés dans d'autres secteurs comme par exemple, l'automobile ou dans le domaine médical.

La réalisation d'un tel capuchon comprend une étape de moulage du corps et une étape de moulage de l'opercule. Le corps et l'opercule sont alors dirigés vers un poste d'emboîtement où un corps et un opercule sont emboîtés l'un dans l'autre avant d'être fixés sur le col d'une bouteille.

Le document FR-A-2 939 710 divulgue un système de moulage.

La réalisation d'un composant constitué de deux pièces moulées emboîtées, comme par exemple un capuchon, nécessite un poste de moulage d'une première pièce (l'opercule), un poste de moulage d'une deuxième pièce (le corps) et un poste d'emboîtement de la première pièce et de la deuxième pièce. Le coût financier de tels postes est souvent élevé et la multiplication des étapes augmente le temps de fabrication.

Un objet de la présente invention est de proposer un système de moulage et d'emboîtement de deux pièces qui ne présente pas les inconvénients de l'art antérieur.

A cet effet, est proposé un système de moulage et d'emboîtement d'une première pièce et d'une deuxième pièce par exemple du type opercule et corps d'un capuchon, le système de moulage et d'emboîtement comportant :
- deux rails de guidage s'étendant parallèlement à une première direction,
- pour chaque rail de guidage, un chariot monté mobile en translation sur le rail de guidage,
- pour chaque chariot, un porteur de came mobile en translation par rapport audit chariot parallèlement à la première direction et présentant une came dont les deux extrémités sont distantes l'une de l'autre selon une direction d'emboîtement perpendiculaire à ladite première direction,
- une barre d'assemblage portant une série de premières empreintes, chaque première empreinte étant destinée à mouler une des premières pièces, chaque extrémité de la barre d'assemblage étant montée dans l'une des deux cames,
- une série de deuxièmes empreintes, chaque deuxième empreinte étant destinée à mouler une des deuxièmes pièces,
- un dispositif d'activation prévu pour déplacer les porteurs de came, et
- pour chaque chariot, un dispositif de verrouillage prévu pour verrouiller ledit chariot alternativement avec le porteur de came et le rail de guidage,
- la barre d'assemblage étant, d'une part, mobile en translation parallèlement à la première direction entre une première position dans laquelle la première série d'empreintes n'est pas en vis-à-vis de la série de deuxièmes empreintes et une deuxième position dans laquelle la première série d'empreintes est en vis-à-vis de la série de deuxièmes empreintes, et, d'autre part, à partir de la deuxième position, mobile en translation parallèlement à la direction d'emboîtement, entre une position distante dans laquelle la première pièce et la deuxième pièce ne sont pas emboîtées et une position d'emboîtement dans laquelle la première pièce et la deuxième pièce sont emboîtées.

Avantageusement, le système de moulage et d'emboîtement comprend des moyens de blocage prévus pour bloquer la translation de la barre d'assemblage par rapport à chaque chariot selon la première direction.

Avantageusement, chaque chariot présente une paroi intérieure disposée entre la came dudit chariot et l'autre chariot, et les moyens de blocage sont constitués par une fenêtre réalisée dans chaque paroi intérieure et dont les bords parallèles à la direction d'emboîtement sont en appui contre des flancs de la barre d'assemblage.

Avantageusement, le dispositif de verrouillage comprend un loquet, une première rainure de verrouillage réalisée sur le porteur de cames et une deuxième rainure de verrouillage réalisée sur le rail de guidage, et le loquet est prévu pour s'engager alternativement dans la première rainure de verrouillage ou la deuxième rainure de verrouillage.

Avantageusement, le loquet prend la forme d'un élément oblong, lorsque une première extrémité rayonnée coopère avec la première rainure de verrouillage, la deuxième extrémité rayonnée est en appui sur une surface du rail de guidage, et lorsque la deuxième extrémité rayonnée coopère avec la deuxième rainure de verrouillage, la première extrémité rayonnée est en appui sur une surface du porteur de cames.

Avantageusement, les premières pièces ou les deuxièmes pièces sont des opercules d'un capuchon et en ce que, respectivement, les deuxièmes pièces ou les premières pièces sont des corps du capuchon.

Avantageusement, la came présente à son extrémité correspondant à la position distante, une partie horizontale.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de moulage et d'emboîtement de deux pièces selon l'invention après retrait d'une partie du chariot,
les Figs. 2 à 4 représentent les différentes étapes de fonctionnement du système de moulage et d'emboîtement de deux pièces selon l'invention,
la Fig. 5 représente un mode de réalisation d'empreintes de moulage pour un système de moulage et d'emboîtement selon l'invention,
la Fig. 6 est un détail du système de moulage et d'emboîtement avec le chariot complet, et
la Fig. 7 est une coupe selon la ligne VII-VII de la Fig. 6.

L'invention va être plus particulièrement décrite dans le cas d'un capuchon constitué d'un corps et d'un opercule.

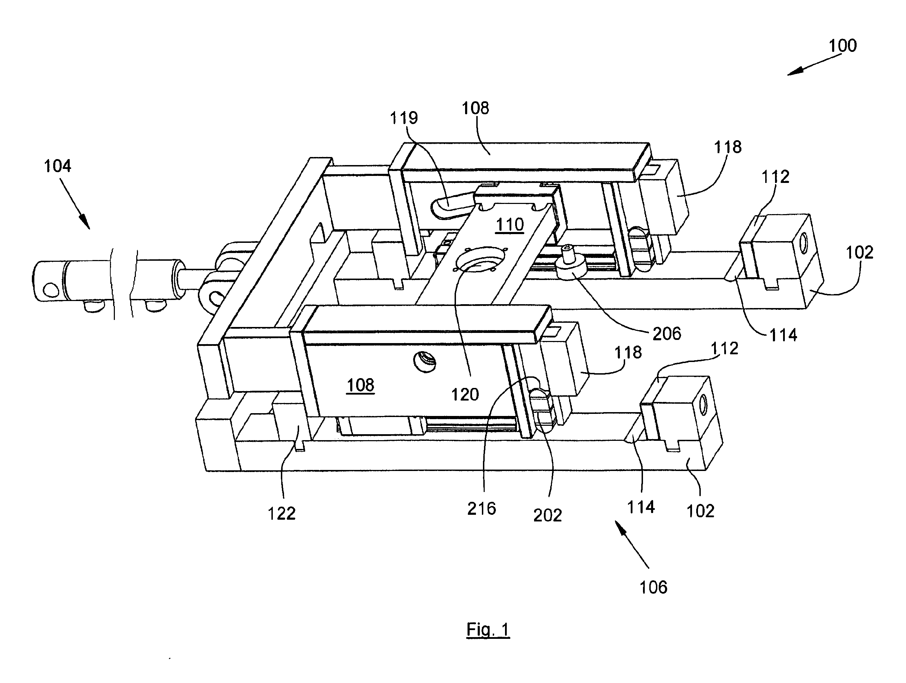

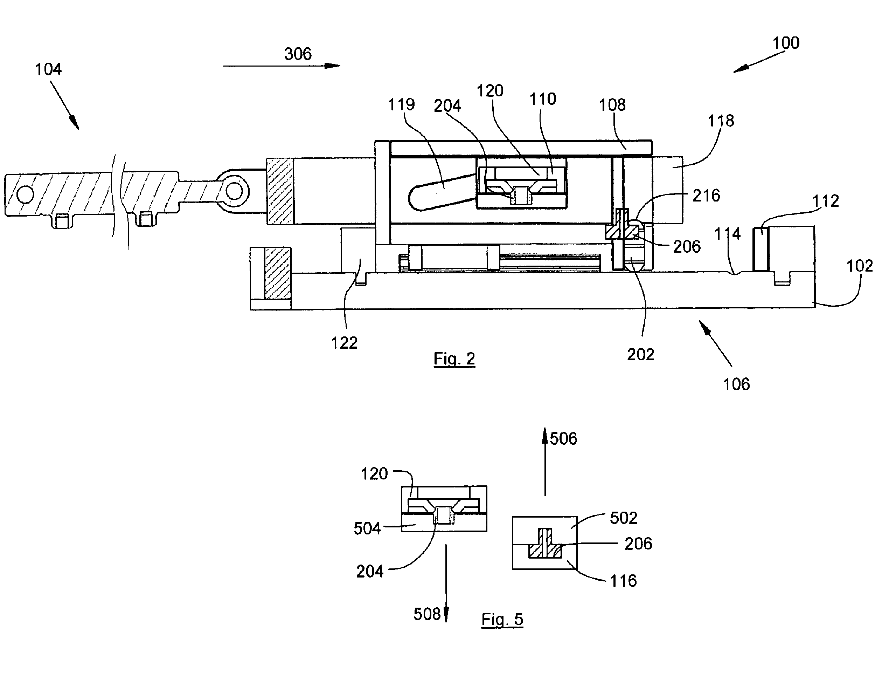

La Fig. 1 représente un système de moulage et d'emboîtement 100 d'une première pièce 204 et d'une deuxième pièce 206, comme par exemple un opercule 204 (Fig. 2) et un corps 206 d'un capuchon.

Le système de moulage et d'emboîtement 100 comprend une base constituée principalement de deux rails de guidage 102 parallèles et qui définissent une première direction qui est ici horizontale.

Chaque rail de guidage 102 est monté ici sur un châssis qui permet de solidariser le système de moulage et d'emboîtement 100 avec un ensemble presse à injection et moule.

Pour chaque rail de guidage 102, le système de moulage et d'emboîtement 100 comprend un chariot 108. Chaque chariot 108 est mobile en translation le long du rail de guidage 102 considéré entre une butée aval 122 et une butée amont 112. Chaque chariot 108 est guidé en translation sur le rail de guidage 102 considéré par tous dispositifs adéquats et les butées 112 et 122 sont disposées de manière à autoriser le déplacement de chaque chariot 108 sur une distance appropriée comme cela sera mieux compris par la suite.

Les deux rails 102 définissent un plan de déplacement dans lequel se déplacent les chariots 102. Le plan de déplacement est ici le plan horizontal.

Le système de moulage et d'emboîtement 100 comprend, pour chaque chariot 108, un porteur de came 118 présentant une came 119.

Chaque came 119 est contenue dans un plan d'emboîtement qui est parallèle à la première direction et perpendiculaire au plan de déplacement. Le plan d'emboîtement est ici vertical.

Chaque came 119 présente deux extrémités qui sont distantes l'une de l'autre selon la première direction et distantes l'une de l'autre selon une direction d'emboîtement contenue dans le plan d'emboîtement et perpendiculaire à la première direction. Ici la direction d'emboîtement est verticale.

Ainsi, chaque came 119 présente un dénivelé qui est ici une pente descendante en progressant de la butée amont 112 vers la butée aval 122. Les deux porteurs de came 118 sont disposés de manière à ce que les cames 19 se fassent face.

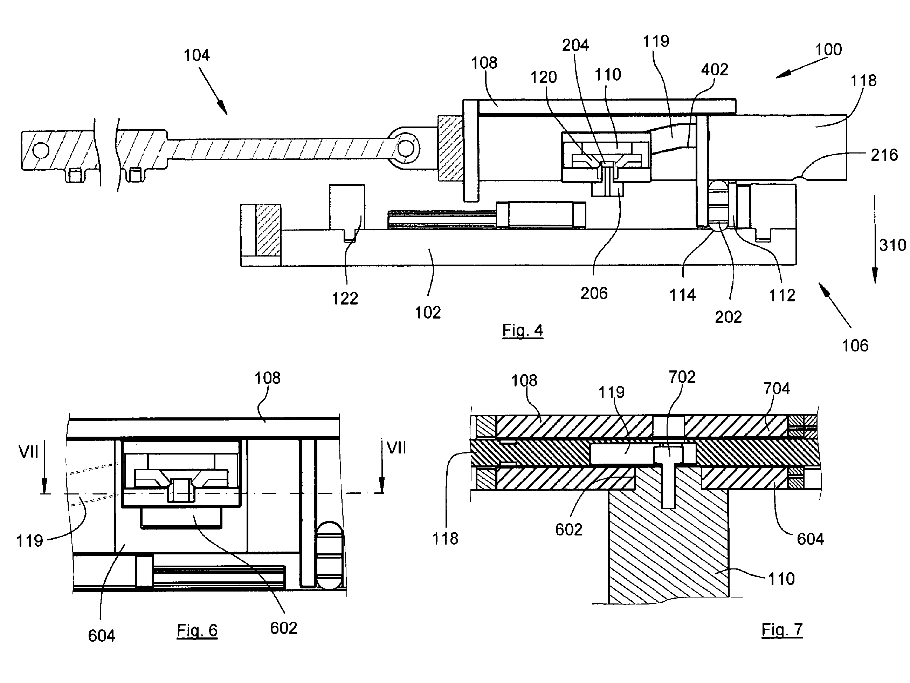

Pour des raisons de clarté et pour permettre de voir la came 119, une partie du chariot 108 a été retirée. Cette partie est vue sur les Figs. 6 et 7.

Comme cela est mieux vu sur les Figs. 2 à 4 qui représentent les différentes étapes de fonctionnement du système de moulage et d'emboîtement 100 qui est ici en coupe, la came 119 présente donc ici une pente positive en progressant de la butée aval 122 vers la butée amont 112.

Chaque porteur de came 118 est monté coulissant sur le chariot 108 correspondant parallèlement à la première direction (flèche 306). Le porteur de came 118 coulisse parallèlement à la première direction à l'intérieur du chariot 108 à travers une rainure qui traverse ce dernier.

Le système de moulage et d'emboîtement 100 comprend une barre d'assemblage 110 qui prend la forme d'une poutre rectiligne qui s'étend entre les porteurs de came 118 perpendiculairement au plan d'emboîtement, c'est-à-dire ici horizontalement. Chaque extrémité de la barre d'assemblage 110 est pourvue d'un arbre (702, Fig. 7) qui est ici cylindrique et qui est monté dans l'une des deux cames 119, ainsi la barre d'assemblage 110 peut suivre la forme des cames 119.

La Fig. 6 montre un détail équivalent à la Fig. 2 dans lequel le chariot 108 est complet et la Fig. 7 est une coupe de la Fig. 6.

Le système de moulage et d'emboîtement 100 comprend des moyens de blocage 602 qui sont prévus pour bloquer la translation selon la première direction de la barre d'assemblage 110 par rapport à chaque chariot 108, c'est-à-dire ici la direction horizontale, tout en laissant libre la translation selon la direction d'emboîtement. Ainsi, par rapport aux chariots 108, la barre d'assemblage 110 est uniquement mobile en translation selon la direction d'emboîtement, c'est-à-dire verticalement.

Dans le mode de réalisation de l'invention présenté sur les Figs., le porteur de came 118 est disposé entre une paroi extérieure 704 et une paroi intérieure 604 du chariot 108 et qui sont parallèles au plan d'emboîtement. Les parois intérieures 604 de chaque chariot 108 se font face et constituent les parties retirées dans les Figs. 1 à 4.

Chaque paroi intérieure 604 est donc disposée entre la came 119 du chariot 108 considéré et l'autre chariot 108.

Les moyens de blocage 602 sont ici constitués par une fenêtre 602 réalisée dans chaque paroi intérieure 604 et dont les bords parallèles à la direction d'emboîtement sont en appui contre des flancs de la barre d'assemblage 110.

Ainsi, la barre d'assemblage 110 ne peut se déplacer selon la première direction indépendamment des chariots 108 et ne peut se déplacer que selon la direction d'emboîtement par rapport aux chariots 108.

La barre d'assemblage 110 porte une série de premières empreintes de moulage 120 dont chacune est destinée à mouler un opercule 204.

Le système de moulage et d'emboîtement 100 comprend une série de deuxièmes empreintes de moulage 116 disposée entre les deux chariots 108, chacune des deuxièmes empreintes 116 étant destinée à mouler le corps 206. Pour chaque capuchon, une première empreinte 120 est associée à une deuxième empreinte 116. Dans le mode de réalisation des Figs., il y a une seule première empreinte 120 et une seule deuxième empreinte 116, mais il est possible de prévoir que la barre d'assemblage 110 porte plusieurs premières empreintes 120 associées à un même nombre de deuxièmes empreintes 116.

Le système de moulage et d'emboîtement 100 comprend également un dispositif d'activation 104 qui est prévu pour agir sur les porteurs de came 118 afin de les déplacer dans un sens ou dans l'autre parallèlement à la première direction.

Le système de moulage et d'emboîtement 100 comprend également, pour chaque chariot 108, un dispositif de verrouillage 106 prévu pour verrouiller le chariot 108 alternativement avec le porteur de came 118 et le rail de guidage 102.

Lorsque le dispositif de verrouillage 106 verrouille le chariot 108 avec le porteur de came 118, ceux-ci sont solidaires et se déplacent ensemble le long du rail 102. Lorsque le dispositif de verrouillage 106 verrouille le chariot 108 avec le rail de guidage 102, ceux-ci sont liés et le chariot 108 reste immobile tandis que le porteur de came 118 peut continuer de se déplacer librement dans le chariot 108 parallèlement au rail 102.

La Fig. 2 montre le système de moulage et d'emboîtement 100, où la barre d'assemblage 110 est dans une première position, dans laquelle le chariot 108 est en butée contre la butée aval 122 et dans laquelle la première série d'empreintes 120 n'est pas en vis-à-vis de la série de deuxièmes empreintes 116.

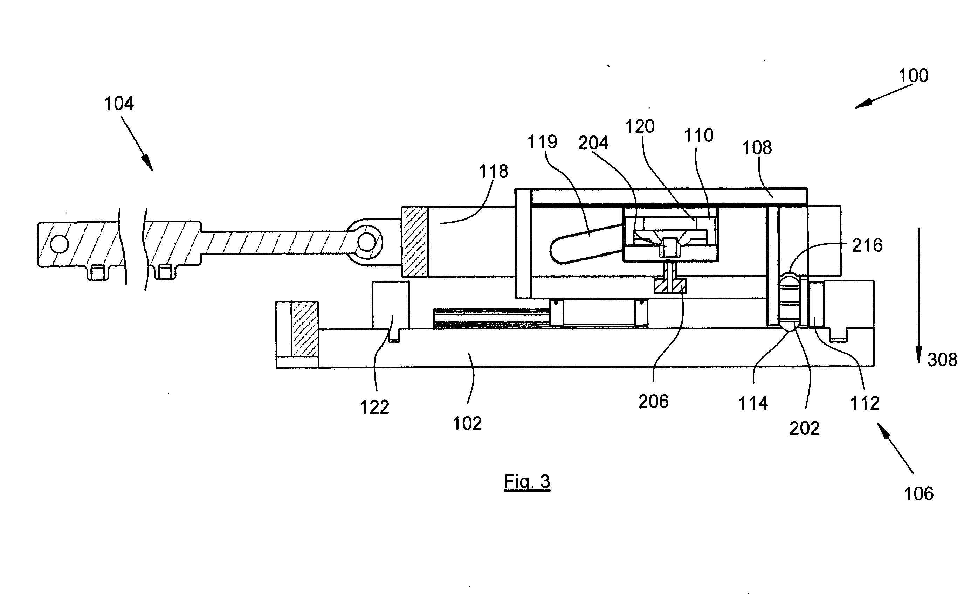

La Fig. 3 montre le système de moulage et d'emboîtement 100, où la barre d'assemblage 110 est dans une deuxième position, dans laquelle le chariot 108 est en butée contre la butée amont 112 et dans laquelle la première série d'empreintes 120 est en vis-à-vis de la série de deuxièmes empreintes 116 et à distance de celle-ci. Cette position correspond à une position distante.

Entre la première position et la deuxième position, la barre d'assemblage 110 se déplace en translation parallèlement à la première direction.

La Fig. 4 montre le système de moulage et d'emboîtement 100 dans une position d'emboîtement de la première pièce 204 sur la deuxième pièce 206. C'est-à-dire qu'à partir de la deuxième position, la barre d'assemblage 110 est mobile en translation parallèlement à la direction d'emboîtement entre la position distante et la position d'emboîtement.

A partir de la butée aval 122, le dispositif de verrouillage 106 verrouille le chariot 108 avec le porteur de came 118 afin de les solidariser. Le dispositif d'activation 104 entraîne chaque porteur de came 118 en translation parallèlement à la première direction (Fig. 2).

Lorsque les chariots 108 viennent en butée contre les butées amont 112, chaque dispositif de verrouillage 106 verrouille un chariot 108 avec le rail 102 correspondant, ce qui bloque la translation dudit chariot 108 (Fig. 3).

Le dispositif d'activation 104 continue à entraîner chaque porteur de came 118 en translation parallèlement à la première direction (Fig. 4). De ce fait la came 119 se déplace par rapport à la barre d'assemblage 110 qui suit alors la pente descendante de la came 119 pour venir en position d'emboîtement. Du fait des moyens de blocage 602 qui bloquent la translation de la barre d'assemblage 110 selon la première direction, celle-ci ne peut se déplacer que selon la direction d'emboîtement.

La barre d'assemblage 110 est contrainte de suivre la came 119 et ne peut se déplacer que selon la direction d'emboîtement qui est ici la direction verticale.

Le dispositif d'activation 104 est ici constitué d'un vérin qui peut être pneumatique, hydraulique ou électrique, et d'un étrier à deux branches. Chaque branche est solidaire de l'un des porteurs de came 118 tandis que le vérin 104 agit sur l'étrier.

Chaque barre d'assemblage 110 est donc soumise à un mouvement de translation selon la première direction correspondant à la direction parallèle aux rails 102 et à un mouvement de translation selon la direction d'emboîtement.

Chaque dispositif de verrouillage 106 comprend un loquet 202 solidaire d'un chariot 108, une première rainure de verrouillage 216 réalisée sur le porteur de came 118 et une deuxième rainure de verrouillage 114 réalisée dans le rail de guidage 102. Le loquet 202 s'engage alternativement dans la première rainure de verrouillage 216 et dans la deuxième rainure de verrouillage 114, de manière à verrouiller le chariot 108 alternativement avec le porteur de came 118 et le rail de guidage 102.

Le loquet 202 prend la forme d'un élément oblong dont chaque extrémité rayonnée coopère avec l'une des rainures de verrouillage 114, 216. Lorsqu'une première extrémité rayonnée coopère avec la première rainure de verrouillage 216, la deuxième extrémité rayonnée glisse sur une surface du rail de guidage 102. Lorsque la deuxième extrémité rayonnée coopère avec la deuxième rainure de verrouillage 114, la première extrémité rayonnée glisse sur une surface du porteur de came 118.

Sur la Fig. 2, le loquet 202 est verrouillé avec la première rainure de verrouillage 216 par appui de la deuxième extrémité rayonnée sur la surface du rail de guidage 102, le porteur de came 118 et le chariot 108 se déplacent en translation sur le rail de guidage 102 (flèche 306) et viennent en butée contre la butée amont 112 (Fig. 3). Chaque première empreinte 120 qui porte un opercule 204 et chaque barre d'assemblage 110 suivent le chariot 108. La barre d'assemblage 110 atteint alors la deuxième position, c'est-à-dire la position dans laquelle l'opercule 204 est en vis-à-vis du corps 206.

Au cours de l'étape représentée sur la Fig. 3, le loquet 202 se déverrouille de la première rainure de verrouillage 216 et se verrouille avec la deuxième rainure de verrouillage 114 (flèche 308) par appui de la première extrémité rayonnée sur la surface du porteur de came 118.

Au cours de l'étape représentée sur la Fig. 4, le loquet 202 est déverrouillé d'avec la première rainure de verrouillage 216, le porteur de came 118 continue à avancer. Comme le loquet 202 est verrouillé avec la deuxième rainure de verrouillage 114, le chariot 108 reste immobile. La poursuite du mouvement du porteur de came 118 entraîne le déplacement selon la direction d'emboîtement de la barre d'assemblage 110 dans les cames 119 et donc le rapprochement de l'opercule 204 du corps 206.

Le retour à la position de la Fig. 2 s'effectue par déplacement en sens inverse des porteurs de came 119.

Après emboîtement de l'opercule 204 et du corps 206, cet ensemble est éjecté. Les porteurs de cames 118 sont ensuite entraînés en translation dans le sens inverse au sens de la flèche 306, ce qui permet un retour de la barre d'assemblage 110 à sa position distante dans les cames 119 (Fig. 3). La poursuite du mouvement des porteurs de cames 118 entraîne le verrouillage du loquet 202 avec la première rainure de verrouillage 216 et donc le déplacement conjoint des porteurs de cames 118 et des chariots 108 pour un retour jusqu'à la butée aval 122.

Un nouveau cycle d'injection/moulage, d'emboîtement et d'éjection peut avoir lieu.

La réalisation du système de moulage et d'emboîtement 100 est particulièrement simple et son fonctionnement est facile à gérer car il y a un seul élément à commander, il s'agit ici du vérin 104.

Pour faciliter le maintien en position de la barre d'assemblage 110 lors du déplacement des chariots 108 entre les butées aval 122 et les butées amont 112, chaque came 119 présente à son extrémité correspondant à la position distante, une partie horizontale 402. Dans le mode de réalisation de l'invention des Figs., la partie horizontale est la partie supérieure de la came 119.

La Fig. 5 représente un mode de réalisation des empreintes de moulage d'un capuchon.

L'opercule 204 est réalisé à partir de la première empreinte 120 qui vient conformer la partie supérieure de l'opercule 204, et d'une autre empreinte, dite la troisième empreinte 504 qui vient conformer la partie inférieure de l'opercule 204, c'est-à-dire la partie qui s'emboîtera ultérieurement sur le corps 206.

Le corps 206 est moulé à partir de la deuxième empreinte de moulage 116 qui vient mouler la partie inférieure du corps 206, c'est-à-dire la partie qui est destinée à s'emboîter ultérieurement sur une bouteille, et d'une autre empreinte, dite la quatrième empreinte 502 qui vient mouler la partie supérieure du corps 206 sur laquelle vient s'emboîter l'opercule 204.

La série de premières empreintes 120 est la série qui est portée par la barre d'assemblage 110. La série de troisièmes empreintes 504 et la série de quatrièmes empreintes 502 sont disposées sur des ensembles mobiles.

Les quatre empreintes 120, 116, 502 et 504 sont associées à la presse à injection qui les alimente en matériaux de moulage.

Après le moulage des capuchons, chaque troisième empreinte 504 et chaque quatrième empreinte 502 sont déplacées par leur ensemble mobile respectivement dans le sens de la flèche 508 et de la flèche 506 de manière à dégager les zones où l'emboîtement aura lieu.

La Fig. 2 représente le système de moulage et d'emboîtement 100 après le moulage des corps 206 et des opercules 204 et après dégagement des troisièmes empreintes 504 et des quatrièmes empreintes 502.

Après le moulage des capuchons 204, 206 et le dégagement de la troisième empreinte 504 et de la quatrième empreinte 502, le procédé d'emboîtement du corps 206 et de l'opercule 204 comprend:
- une étape de déplacement en translation selon la première direction des porteurs de cames 118 et des chariots 108 ainsi que des premières empreintes 120 qui y sont liées jusqu'à la deuxième position (position distante),
- une étape d'arrêt du déplacement lorsque les premières empreintes 120 sont correctement positionnées, c'est-à-dire lorsque chaque première empreinte 120 est en vis-à-vis de la deuxième empreinte 116 associée, cette position correspondant à la mise en butée des chariots 108 contre les butées amont 112,
- une étape de déplacement en translation des porteurs de cames 118 selon la première direction,
- une étape de déplacement de la barre d'assemblage 110 dans les cames 119 de manière à ce que le corps 206 et l'opercule 204 s'emboîtent,
- une étape de déplacement en translation, d'abord des porteurs de cames 118, puis des porteurs de cames 118 et des chariots 108, ainsi que des premières empreintes 120 dans une direction opposée à la première étape de déplacement, et
- une étape d'arrêt du déplacement lorsque les chariots 108 sont en butée contre les butées aval 122.

Chaque capuchon ainsi réalisé peut alors être éjecté de la deuxième empreinte 116.

L'invention a été plus particulièrement décrite dans le cas d'un capuchon mais elle s'applique de la même manière à tout élément comportant deux pièces moulées devant être assemblées ensemble, en particulier, l'invention s'applique de la même manière si la position du corps et la position de l'opercule sont inversées.

Par exemple, il est possible de prévoir que les cames aient des pentes inverses si la première pièce est disposée sous la deuxième pièce lors de l'emboîtement. La deuxième pièce 206 doit alors se trouver à une altitude plus élevée que celle de la première pièce 204 au moment du moulage.

## Revendications

1. Système de moulage et d'emboîtement (100) d'une première pièce (204) et d'une deuxième pièce (206) par exemple du type opercule et corps d'un capuchon, le système de moulage et d'emboîtement (100) comportant :
- deux rails de guidage (102) s'étendant parallèlement à une première direction,
- pour chaque rail de guidage (102), un chariot (108) monté mobile en translation sur le rail de guidage (102),
- une série de premières empreintes (120), chaque première empreinte (120) étant destinée à mouler une des premières pièces (204),
- une série de deuxièmes empreintes (116), chaque deuxième empreinte étant destinée à mouler une des deuxièmes pièces (206),
le système de moulage et d'emboîtement (100) étant **caractérisé en ce qu'**il comporte en outre:
- pour chaque chariot (108), un porteur de came (118) mobile en translation par rapport audit chariot (108) parallèlement à la première direction et présentant une came (119) dont les deux extrémités sont distantes l'une de l'autre selon une direction d'emboîtement perpendiculaire à ladite première direction,
- une barre d'assemblage (110) portant ladite série de premières empreintes (120), chaque extrémité de la barre d'assemblage (110) étant montée dans l'une des deux cames (119),
- un dispositif d'activation (104) prévu pour déplacer les porteurs de came (118), et
- pour chaque chariot (108), un dispositif de verrouillage (106) prévu pour verrouiller ledit chariot (108) alternativement avec le porteur de came (118) et le rail de guidage (102),
- la barre d'assemblage (110) étant, d'une part, mobile en translation parallèlement à la première direction entre une première position dans laquelle la première série d'empreintes (120) n'est pas en vis-à-vis de la série de deuxièmes empreintes (116) et une deuxième position dans laquelle la première série d'empreintes (120) est en vis-à-vis de la série de deuxièmes empreintes (116), et, d'autre part, à partir de la deuxième position, mobile en translation parallèlement à la direction d'emboîtement, entre une position distante dans laquelle la première pièce (204) et la deuxième pièce (206) ne sont pas emboîtées et une position d'emboîtement dans laquelle la première pièce (204) et la deuxième pièce (206) sont emboîtées.

2. Système de moulage et d'emboîtement (100) selon la revendication 2, **caractérisé en ce que** chaque chariot (108) présente une paroi intérieure (604) disposée entre la came (119) dudit chariot (108) et l'autre chariot (108), et **en ce que** les moyens de blocage (602) sont constitués par une fenêtre (602) réalisée dans chaque paroi intérieure (604) et dont les bords parallèles à la direction d'emboîtement sont en appui contre des flancs de la barre d'assemblage (110).

3. Système de moulage et d'emboîtement (100) selon l'une des revendications 1 à 3, **caractérisé en ce que** le dispositif de verrouillage (106) comprend un loquet (202), une première rainure de verrouillage (216) réalisée sur le porteur de cames (118) et une deuxième rainure de verrouillage (114) réalisée sur le rail de guidage (102), et **en ce que** le loquet (202) est prévu pour s'engager alternativement dans la première rainure de verrouillage (216) ou la deuxième rainure de verrouillage (114).

4. Système de moulage et d'emboîtement (100) selon la revendication 4, **caractérisé en ce que** le loquet (202) prend la forme d'un élément oblong, **en ce que** lorsque une première extrémité rayonnée coopère avec la première rainure de verrouillage (216), la deuxième extrémité rayonnée est en appui sur une surface du rail de guidage (102), et **en ce que** lorsque la deuxième extrémité rayonnée coopère avec la deuxième rainure de verrouillage (114), la première extrémité rayonnée est en appui sur une surface du porteur de cames (118).

5. Système de moulage et d'emboîtement (100) selon l'une des revendications 1 à 5, **caractérisé en ce que** les premières pièces ou les deuxièmes pièces sont des opercules (204) d'un capuchon et **en ce que**, respectivement, les deuxièmes pièces ou les premières pièces sont des corps (206) du capuchon.

6. Système de moulage et d'emboîtement (100) selon l'une des revendications 1 à 5, **caractérisé en ce que** la came (119) présente à son extrémité correspondant à la position distante, une partie horizontale (402).

## Patentansprüche

1. System (100) zum Formen und Zusammenstecken eines ersten Bauteils (204) und eines zweiten Bauteils (206), zum Beispiel von der Art Deckel und Körper einer Verschlusskappe, wobei das Form- und Zusammenstecksystem (100) aufweist:
- zwei Führungsschienen (102), die sich parallel zu einer ersten Richtung erstrecken,
- für jede Führungsschiene (102) einen Schlitten (108), der translationsbeweglich auf die Führungsschiene (102) montiert ist,
- eine Reihe erster Vertiefungen (120), wobei jede erste Vertiefung (120) dazu bestimmt ist, eines der ersten Bauteile (204) zu formen,
- eine Reihe zweiter Vertiefungen (116), wobei jede zweite Vertiefung dazu bestimmt ist, eines der zweiten Bauteile (206) zu formen,
wobei das Form- und Zusammenstecksystem (100) **dadurch gekennzeichnet ist, dass** es außerdem aufweist:
- für jeden Schlitten (108) einen Nockenträger (118), der bezüglich des Schlittens (108) parallel zur ersten Richtung translationsbeweglich ist und eine Nocke (119) aufweist, deren zwei Enden gemäß einer zur ersten Richtung lotrechten Zusammensteckrichtung voneinander entfernt sind,
- eine Montagestange (110), die die Reihe von ersten Vertiefungen (120) trägt, wobei jedes Ende der Montagestange (110) in eine der zwei Nocken (119) montiert ist,
- eine Aktivierungsvorrichtung (104), die dafür vorgesehen ist, die Nockenträger (118) zu verschieben, und
- für jeden Schlitten (108) eine Verriegelungsvorrichtung (106), die dafür vorgesehen ist, den Schlitten (108) alternativ mit dem Nockenträger (118) bzw. mit der Führungsschiene (102) zu verriegeln,
- wobei die Montagestange (110) einerseits parallel zur ersten Richtung zwischen einer ersten Stellung, in der die erste Reihe von Vertiefungen (120) nicht gegenüber der Reihe von zweiten Vertiefungen (116) liegt, und einer zweiten Stellung translationsbeweglich ist, in der die erste Reihe von Vertiefungen (120) gegenüber der Reihe von zweiten Vertiefungen (116) liegt, und andererseits ausgehend von der zweiten Stellung parallel zur Zusammensteckrichtung zwischen einer fernen Stellung, in der das erste Bauteil (204) und das zweite Bauteil (206) nicht zusammengesteckt sind, und einer Zusammensteckstellung translationsbeweglich ist, in der das erste Bauteil (204) und das zweite Bauteil (206) zusammengesteckt werden.

2. Form- und Zusammenstecksystem (100) nach Anspruch 1, **dadurch gekennzeichnet, dass** jeder Schlitten (108) eine Innenwand (604) aufweist, die zwischen der Nocke (119) des Schlittens (108) und dem anderen Schlitten (108) angeordnet ist, und dass die Blockiereinrichtungen (602) aus einem Fenster (602) bestehen, das in jeder Innenwand (604) ausgebildet ist und dessen zur Zusammensteckrichtung parallele Ränder an Flanschen der Montagestange (110) anliegen.

3. Form- und Zusammenstecksystem (100) nach einem der Ansprüche 1 bis 2, **dadurch gekennzeichnet, dass** die Verriegelungsvorrichtung (106) einen Riegel (202), eine erste Verriegelungsnut (216), die auf dem Nockenträger (118) ausgebildet ist, und eine zweite Verriegelungsnut (114) aufweist, die auf der Führungsschiene (102) ausgebildet ist, und dass der Riegel (202) vorgesehen ist, um abwechselnd in die erste Verriegelungsnut (216) oder in die zweite Verriegelungsnut (114) einzugreifen.

4. Form- und Zusammenstecksystem (100) nach Anspruch 3, **dadurch gekennzeichnet, dass** der Riegel (202) die Form eines länglichen Elements annimmt, dass, wenn ein erstes abgerundetes Ende mit der ersten Verriegelungsnut (216) zusammenwirkt, das zweite abgerundete Ende auf einer Fläche der Führungsschiene (102) aufliegt, und dass, wenn das zweite abgerundete Ende mit der zweiten Verriegelungsnut (114) zusammenwirkt, das erste abgerundete Ende auf einer Fläche des Nockenträgers (118) aufliegt.

5. Form- und Zusammenstecksystem (100) nach einem der Ansprüche 1 bis 4, **dadurch gekennzeichnet, dass** die ersten Bauteile oder die zweiten Bauteile Deckel (204) einer Verschlusskappe sind und dass die zweiten Bauteile bzw. die ersten Bauteile Körper (206) der Verschlusskappe sind.

6. Form- und Zusammenstecksystem (100) nach einem der Ansprüche 1 bis 5, **dadurch gekennzeichnet, dass** die Nocke (119) an ihrem der fernen Stellung entsprechenden Ende einen waagrechten Bereich (402) aufweist.

## Claims

1. A system (100) for moulding and fitting a first part (204) and a second part (206), for example a lid and a body of a bottle cap, the moulding and fitting system (100) including:
- two guide rails (102) extending parallel to a first direction,
- for each guide rail (102), a carriage (108) mounted movably in translation on the guide rail (102),
- a set of first indentations (120), each first indentation (120) being intended to mould one of the first parts (204),
- a set of second indentations (116), each second indentation being intended to mould one of the second parts (206),
the moulding and fitting system (100) being **characterized in that** it further comprises:
- for each carriage (108), a cam carrier (118) which is movable in translation with respect to the carriage (108) parallel to the first direction and which has a cam (119) whose two ends are spaced apart from one another in a direction of fitting perpendicular to the first direction,
- an assembly bar (110) carrying the set of first indentations (120), each end of the assembly bar (110) being mounted in one of the two cams (119),
- an activation device (104) designed to move the cam carriers (118), and
- for each carriage (108), a locking device (106) designed to lock the carriage (108) alternatively to the cam carrier (118) and the guide rail (102),
- the assembly bar (110) being, on the one hand, movable in translation parallel to the first direction between a first position in which the first set of indentations (120) does not face the set of second indentations (116) and a second position in which the first set of indentations (120) faces the set of second indentations (116), and, on the other hand, starting from the second position, movable in translation parallel to the direction of fitting, between a remote position in which the first part (204) and the second part (206) are not fitted together and a fitting position in which the first part (204) and the second part (206) are fitted together.

2. A moulding and fitting system (100) according to Claim 2, **characterized in that** each carriage (108) has an inner wall (604) positioned between the cam (119) of the carriage (108) and the other carriage (108), and **in that** the securing means (602) are formed by an aperture (602) made in each inner wall (604) and having edges parallel to the direction of fitting which bear against the sides of the assembly bar (110).

3. Moulding and fitting system (100) according to any of Claims 1 to 3, **characterized in that** the locking device (106) comprises a latch (202), a first locking groove (216) formed on the cam carrier (118) and a second locking groove (114) formed on the guide rail (102), and **in that** the latch (202) is designed to engage alternatively in the first locking groove (216) or the second locking groove (114).

4. Moulding and fitting system (100) according to Claim 4, **characterized in that** the latch (202) takes the form of an oblong member; **in that**, when a first radial end interacts with the first locking groove (216), the second radial end bears on a surface of the guide rail (102); and **in that**, when the second radial end interacts with the second locking groove (114), the first radial end bears on a surface of the cam carrier (118).

5. Moulding and fitting system (100) according to any of Claims 1 to 5, **characterized in that** the first parts or the second parts are lids (204) of a cap and **in that**, respectively, the second parts or the first parts are bodies (206) of the cap.

6. Moulding and fitting system (100) according to any of Claims 1 to 5, **characterized in that** the cam (119) has a horizontal part (402) at its end corresponding to the remote position.
